# EUROPEAN PATENT APPLICATION

(11) **EP 3 686 523 A1**
(43) Date of publication of application: **29.07.2020**
(21) Application number: 17926055.9
(22) Date of filing: 20.09.2017
(51) Int. Cl.: F25D 11/00, F25B 1/00, F25B 41/06

(54) **REFRIGERATOR**

(71) Applicant: Mitsubishi Electric Corporation, Chiyoda-ku Tokyo 100-8310 (JP)
(72) Inventor: NAKAJIMA, Komei, Tokyo 100-8310 (JP); FUJITSUKA, Masashi, Tokyo 100-8310 (JP)
(74) Representative: Pfenning, Meinig & Partner mbB
(86) International application number: PCT/JP2017/033894
(87) International publication number: WO 2019/058450

(57) **Abstract**

A refrigeration machine includes: a refrigerant circuit in which a compressor (1), a condenser (2), an expansion device (3), and a cooler (4) are connected by a refrigerant pipe; a fan (6) configured to send air from the cooler (4) to a first storage compartment (13); a first temperature sensor (7) configured to detect a temperature (Tr) of a first storage compartment (13); and a second temperature sensor (8) configured to detect a temperature (Te) of the cooler (4). The expansion device (3) is configured to have a degree of opening corresponding to a fully closed state while the compressor (1) is non-operational. The fan (6) is configured to become non-operational when transition is made, while the compressor (1) is non-operational, from a state in which a temperature difference between a detection temperature of the first temperature sensor (7) and a detection temperature of the second temperature sensor (8) is larger than a criterion value to a state in which the temperature difference is smaller than the criterion value. The fan (6) is configured to become operational when transition is made, while the compressor (1) is operational, from a state in which the temperature difference is smaller than a second criterion value to a state in which the temperature difference is larger than the second criterion value.

## Description

### TECHNICAL FIELD

The present invention relates to a refrigeration machine, particularly, control of a cooler fan and an expansion valve in the refrigeration machine when starting and stopping an operation of a compressor.

### BACKGROUND ART

As a refrigeration machine including a storage compartment, Japanese Patent Laying-Open No. 2011-27325 (Patent Literature 1) describes a refrigerator configured to control a temperature of the storage compartment by rotating a cooler fan when the compressor is non-operational.

The refrigerator described in Japanese Patent Laying-Open No. 2011-27325 can cool the storage compartment without motive power of the compressor by using the cooler having a low temperature after the compressor becomes non-operational. Therefore, a time interval until the operation of the compressor is restarted due to an increased temperature of the storage compartment can be long, thereby providing an effect of reducing an average amount of consumption of power in both operational and non-operational states of the refrigerator.

### CITATION LIST

### PATENT LITERATURE

PTL 1: Japanese Patent Laying-Open No. 2011-27325

### SUMMARY OF INVENTION

### TECHNICAL PROBLEM

In the refrigerator disclosed in Japanese Patent Laying-Open No. 2011-27325, high-pressure refrigerant and low-pressure refrigerant in a refrigeration cycle portion are readily mixed via an expansion device immediately after the compressor becomes non-operational. Hence, the temperature of the low-pressure refrigerant at the cooler side is increased abruptly. Accordingly, when a difference between the temperature of the cooler and the temperature of the storage compartment is small, the temperature of the cooler becomes more than or equal to the temperature of the storage compartment immediately after the compressor becomes non-operational. When the cooler fan is driven with the temperature of the cooler being higher than the temperature of the storage compartment, air having a temperature higher than the temperature of the storage compartment flows into the storage compartment, with the result that the temperature of the storage compartment is increased. Consequently, a time until restarting of the operation of the compressor becomes short, thus resulting in an increased average amount of consumption of power, disadvantageously.

The present invention has been made to solve the foregoing problem, and has an object to provide a refrigeration machine that can suppress increase in temperature of a storage compartment and can reduce an average amount of consumption of power even when a difference is small between a temperature of a cooler and the temperature of the storage compartment.

### SOLUTION TO PROBLEM

A refrigeration machine according to the present disclosure includes: a refrigerant circuit in which a compressor, a condenser, an expansion device, and a cooler are connected by a refrigerant pipe; a first storage compartment configured to store a cooling target; a fan configured to send air from the cooler to the first storage compartment; a first temperature sensor configured to detect a temperature of the first storage compartment; and a second temperature sensor configured to detect a temperature of the cooler. The expansion device is configured to have a degree of opening settable to a fully closed state, and the degree of opening corresponds to the fully closed state while the compressor is non-operational. The fan is configured to continue to be operational while the compressor is non-operational and when a temperature difference obtained by subtracting a detection temperature of the second temperature sensor from a detection temperature of the first temperature sensor is larger than a first criterion value. The fan is configured to become non-operational when transition is made, while the compressor is non-operational, from a state in which the temperature difference is larger than the first criterion value to a state in which the temperature difference is smaller than the first criterion value. The fan is configured to be non-operational while the compressor is operational and when the temperature difference is smaller than a second criterion value. The fan is configured to become operational when transition is made, while the compressor is operational, from a state in which the temperature difference is smaller than the second criterion value to a state in which the temperature difference is larger than the second criterion value.

### ADVANTAGEOUS EFFECTS OF INVENTION

According to the present invention, the temperature of the storage compartment can be suppressed from being increased while the compressor is non-operational. Hence, the non-operational period of the compressor can be long. As a result, there can be realized a refrigeration machine with a reduced average amount of consumption of power including power for turning on and off a compressor.

### BRIEF DESCRIPTION OF DRAWINGS

Fig. 1 is a schematic view of a refrigeration cycle of a refrigeration machine according to a first embodiment.
Fig. 2 shows a first modification of the refrigeration cycle.
Fig. 3 is a schematic view showing a refrigeration machine having one storage compartment.
Fig. 4 is a flowchart for illustrating control in a normal operation mode.
Fig. 5 is a waveform diagram showing a temperature change in a comparative example in which an expansion device is fixed to an open state.
Fig. 6 is a waveform diagram showing a temperature change when the control of Fig. 4 is performed.
Fig. 7 is a flowchart for a condition of stopping an operation of a cooler fan and a condition of driving the cooler fan when sensor variations are taken into consideration.
Fig. 8 is a waveform diagram showing a temperature change when the control of the flowchart of Fig. 7 is performed.
Fig. 9 shows an exemplary configuration of a refrigeration machine having two storage compartments according to a second embodiment.
Fig. 10 shows a modification representing a refrigeration machine having three storage compartments.
Fig. 11 is a schematic view of a refrigeration cycle of a refrigeration machine according to a third embodiment.
Fig. 12 is a schematic view showing an external appearance of a flow path switching valve 9.
Fig. 13 shows a switching state of a flow path switching valve 9.
Fig. 14 is a flowchart showing control performed in a fourth embodiment.
Fig. 15 is a waveform diagram showing a temperature change when the control of the flowchart of Fig. 14 is performed.
Fig. 16 is a schematic view showing a configuration of a refrigeration machine according to a fifth embodiment.

### DESCRIPTION OF EMBODIMENTS

The following describes embodiments of the present invention with reference to figures in detail. It should be noted that the same or corresponding portions in the figures are given the same reference characters and are not described repeatedly.

### First Embodiment.

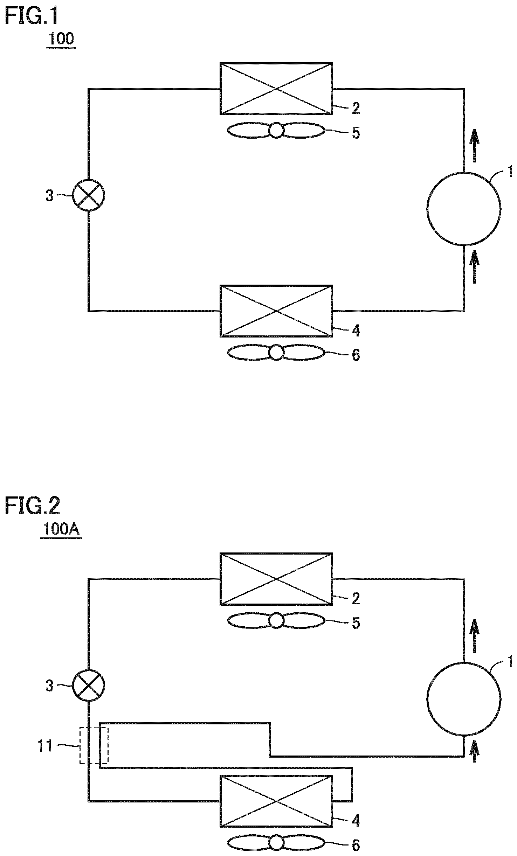

Fig. 1 is a schematic view of a refrigeration cycle of a refrigeration machine according to a first embodiment. With reference to Fig. 1, a refrigeration machine 100 includes: a compressor 1 changeable in rotating speed; a condenser 2; an expansion device 3; a cooler 4; a condenser fan 5; and a cooler fan 6. Compressor 1, condenser 2, expansion device 3, and cooler 4 are communicated via a refrigerant pipe to form a refrigeration cycle. In the first embodiment, an electronic expansion valve changeable in a degree of opening in accordance with a control signal can be used as expansion device 3, for example.

The following describes an operation of the refrigeration cycle in the refrigeration machine according to the first embodiment with reference to Fig. 1. High-temperature high-pressure gas refrigerant discharged from compressor 1 passes through condenser 2 (for example, an air heat exchanger). In condenser 2, the refrigerant exchanges heat with external air around refrigeration machine 100, and the refrigerant is condensed by heat dissipation. The condensed high-pressure liquid refrigerant is decompressed by expansion device 3 and becomes low-pressure two-phase refrigerant. Then, the refrigerant flows into cooler 4. In cooler 4, heat is exchanged between the refrigerant and circulated air from the storage compartment. The circulated air from the storage compartment is cooled by the refrigerant, and the refrigerant becomes low-pressure gas refrigerant. Then, the refrigerant in the form of low-pressure gas flows into compressor 1, is fed with a pressure, and is then discharged again.

Fig. 2 shows a first modification of the refrigeration cycle. As shown in Fig. 2, an internal heat exchanger 11 may be provided to exchange heat with refrigerant in a pipe connected to the outlet of cooler 4 when decompressing the refrigerant in expansion device 3. The temperature at the inlet of expansion device 3 is higher than the temperature at the inlet of the suction pipe connected to compressor 1. Hence, when internal heat exchanger 11 is provided, the refrigerant after introduced into expansion device 3 is cooled by the refrigerant passing through the suction pipe connected to compressor 1. Accordingly, a degree of dryness at the inlet of cooler 4 has a value close to 0 and the refrigerant therefore has a large amount of liquid phase, whereby cooler 4 can be used effectively.

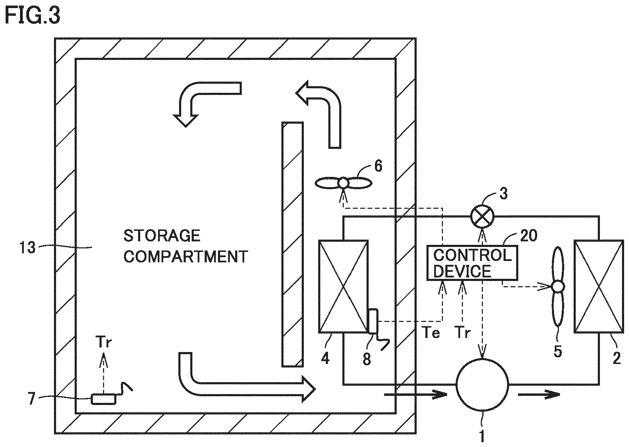

Next, the following describes a refrigeration machine including a storage compartment and a refrigeration cycle. Fig. 3 is a schematic view showing a refrigeration machine having one storage compartment. A structure of the refrigeration machine in the first embodiment will be described with reference to Fig. 3. As shown in Fig. 3, the refrigeration machine according to the first embodiment includes: a storage compartment 13 (any one of a vegetable compartment, a freezer compartment, and a cold compartment); the above-described refrigeration cycle; and temperature sensors 7, 8 respectively installed at storage compartment 13 and cooler 4.

Based on a storage compartment temperature Tr and a cooler temperature Te respectively obtained from temperature sensors 7, 8 as shown in Fig. 3, compressor 1, cooler fan 6, and expansion device 3 are controlled as described below. In this case, the installation locations of the sensors in Fig. 3 are exemplary, and are not limited. For example, temperature sensor 7 may be installed at an upper portion of storage compartment 13 as long as temperature sensor 7 represents the temperature of storage compartment 13. Moreover, temperature sensor 8 for the cooler may be installed at any location as long as temperature sensor 8 represents the temperature of the cooler, such as the center of cooler 4.

Next, a control method will be described. In the present specification, a "normal operation mode" represents a state in which compressor 1 is driven, expansion device 3 is open and cooler fan 6 is driven to cool inside of storage compartment 13. A behavior in the normal operation mode will be described.

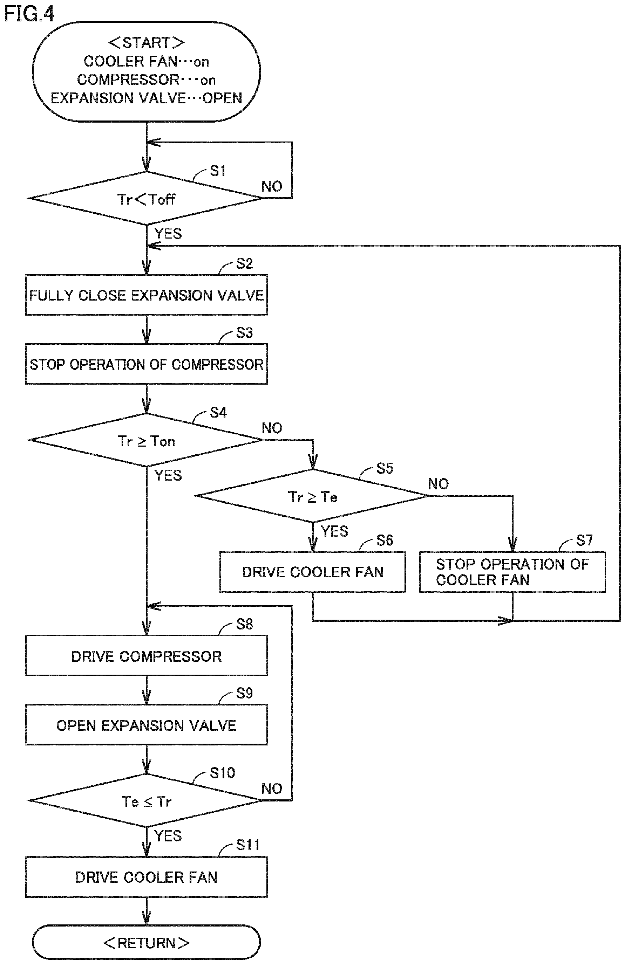

Fig. 4 is a flowchart for illustrating control in the normal operation mode. With reference to Fig. 3 and Fig. 4, while cooling the inside of storage compartment 13 by operating compressor 1, the temperature in storage compartment 13 is decreased gradually. In order to maintain the temperature of storage compartment 13 around a setting temperature, a criterion temperature Toff for stopping the operation of compressor 1 is set. When storage compartment temperature Tr becomes lower than Toff, further cooling is not required. Hence, control device 20 make transition to determine to stop the operation of compressor 1 (YES in step S1).

By stopping the operation of compressor 1 while maintaining pressures at high-pressure portion and low-pressure portion of the refrigeration cycle, loss can be reduced when restarting the operation of compressor 1. Moreover, by using cooler 4 having a low temperature, an amount of consumption of power can be reduced. Hence, control device 20 fully closes expansion device 3 (step S2), and stops the operation of compressor 1 (step S3).

When compressor 1 is non-operational, the low temperature provided by the refrigeration cycle cannot be produced, with the result that temperature Tr of storage compartment 13 is gradually increased due to transfer of heat from external air. In order to maintain temperature Tr of storage compartment 13 around the setting temperature, a criterion temperature Ton for restarting the operation of compressor 1 is set. When storage compartment temperature Tr becomes more than or equal to criterion temperature Ton (YES in step S4), cooling is required, with the result that control device 20 makes transition to an operation for restarting the operation of compressor 1 (step S8).

When storage compartment temperature Tr is less than or equal to Ton (NO in step S4), control device 20 continuously maintains compressor 1 to be non-operational with the inside of storage compartment 13 being maintained to be cool. When compressor 1 is continuously maintained to be non-operational, control device 20 determines whether to continuously operate cooler fan 6 (step S5).

When cooler temperature Te is lower than storage compartment temperature Tr (YES in step S5), it can be determined that cooler 4 can be used to cool storage compartment 13. Hence, control device 20 operates only cooler fan 6 (step S6). On the other hand, when cooler temperature Te is higher than storage compartment temperature Tr (NO in step S5), it can be determined that cooler 4 cannot be used for cooling. Hence, control device 20 stops the operation of cooler fan 6 (step S7). After the processes of step S6 or step S7 are ended and the process of steps S2 and S3 are performed again, control device 20 determines again in step S4 whether to restart the operation of compressor 1.

When Tr≥Ton is satisfied in step S4 (YES in S4), control device 20 drives compressor 1 (step S8) and opens expansion device 3 (step S9). Then, the pressure of the low-pressure portion is decreased gradually. Here, control device 20 determines whether or not cooler temperature Te is higher than storage compartment temperature Tr (step S10). When cooler temperature Te is higher than storage compartment temperature Tr (NO in S10), it can be determined that cooler 4 is not sufficiently cooled, so that the determination of step S10 is performed again after performing the processes of steps S8 and S9. When cooler temperature Te is less than or equal to storage compartment temperature Tr (YES in S10), it can be determined that cooler 4 is sufficiently cooled. Hence, control device 20 drives cooler fan 6 having been non-operational, so as to send cool air to storage compartment 13 again.

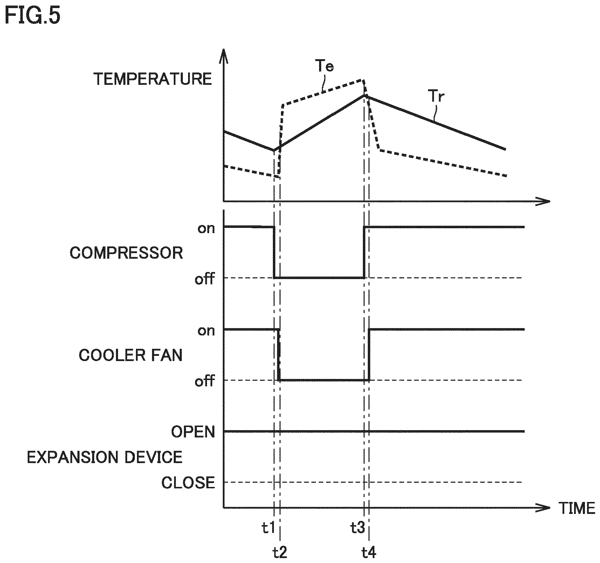

Fig. 5 is a waveform diagram showing a temperature change in a comparative example in which the expansion device is fixed to the open state. In the control of the comparative example, the expansion device is open. Hence, immediately after stopping the operation of compressor 1, the high-pressure refrigerant and the low-pressure refrigerant in the refrigeration cycle portion are readily mixed via expansion device 3. Therefore, temperature Te of the low-pressure refrigerant at the cooler 4 side is abruptly increased at a time t2. Hence, when a difference is small between the temperature of cooler 4 and temperature Tr of storage compartment 13, temperature Te of cooler 4 becomes more than or equal to storage compartment temperature Tr during a period of times t2 to t3 immediately after stopping the operation of the compressor. When the cooler fan is driven with cooler temperature Te being higher than storage compartment temperature Tr, air having a temperature higher than storage compartment temperature Tr flows into storage compartment 13. Hence, storage compartment temperature Tr is increased. As a result, it is necessary to stop the operation of cooler fan 6 immediately after stopping the operation of compressor 1. As a result of such control, the cooling source is lost due to the mixing of the high-pressure refrigerant and the low-pressure refrigerant in the refrigeration cycle portion, with the result that a time until restarting of the operation of compressor 1 becomes short and the average amount of consumption of power is increased.

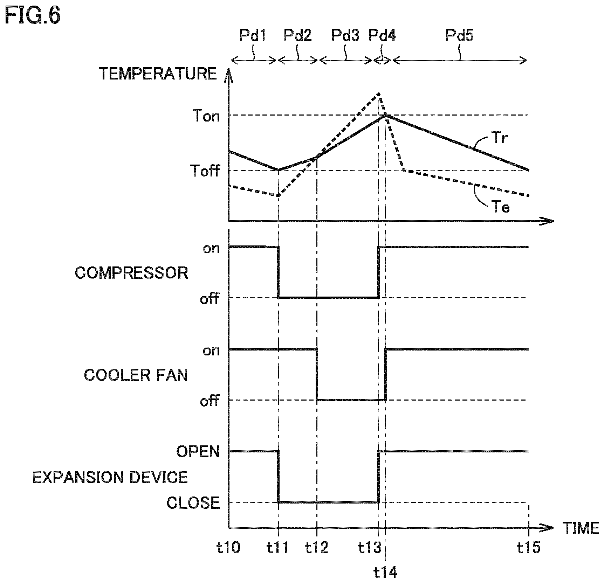

Fig. 6 is a waveform diagram showing a temperature change when the control of Fig. 4 of the first embodiment is performed.

In the control of the first embodiment, when compressor 1 becomes non-operational, expansion device 3 is fully closed (time t11). By fully closing expansion device 3, the high-pressure refrigerant does not flow into the low-pressure side, whereby the low pressure can be maintained. Therefore, even when cooler fan 6 is maintained to be driven, air having a temperature more than or equal to the storage compartment temperature can be prevented from being supplied to storage compartment 13 for a while (times t11 to t12).

When expansion device 3 is fully closed, cooler temperature Te is not increased abruptly, and the state of Tr>Te is maintained during the period of times t11 to t12. During this period, cooler fan 6 can be driven to cool storage compartment 13. However, by rotating cooler fan 6, air in storage compartment 13 warmed by food brought into storage compartment 13 and external air around storage compartment 13 flows into cooler 4. Accordingly, the liquid refrigerant is evaporated to gradually increase cooler temperature Te (times t11 to t12). The increase of cooler temperature Te leads to increase of storage compartment temperature Tr.

When driving only cooler fan 6 with compressor 1 being non-operational, cooler temperature Te coincides with storage compartment temperature Tr after passage of a certain period of time (time t12). In this state, storage compartment 13 cannot be cooled even though cooler fan 6 is driven, thus resulting in a meaningless operation. Hence, when Tr<Te is satisfied, the operation of cooler fan 6 is stopped (times t12 to t13).

When compressor 1 and cooler fan 6 are non-operational, storage compartment temperature Tr is increased because the cooling source is lost. Moreover, the liquid refrigerant remaining in cooler 4 is evaporated gradually to increase pressure in the pipe, thus resulting in increase of cooler temperature Te. On this occasion, expansion device 3 is in the fully closed state (times t12 to t13). This is due to the following reason: by maintaining the high pressure and low pressure while avoiding mixing of the high-pressure refrigerant and the low-pressure refrigerant, on-off loss is reduced when restarting the operation of compressor 1.

After storage compartment temperature Tr becomes more than temperature Ton, control device 20 restarts the operation of compressor 1 in order to cool storage compartment 13. When the operation of compressor 1 is restarted, if cooler temperature Te is higher than storage compartment temperature Tr, cooler fan 6 is maintained to be non-operational (times t13 to t14). In this way, cooler temperature Te is decreased abruptly.

When cooler temperature Te is decreased abruptly to satisfy Te≤Tr, even if cooler fan 6 is driven, air in the cooler with a temperature less than or equal to storage compartment temperature Tr can be sent securely to the inside of storage compartment 13. Hence, cool air can be sent without increasing storage compartment temperature Tr.

Here, in some case, temperature sensors 7, 8 have variations and tolerances (margins) corresponding to the variations should be provided to the determination process. For example, the condition of the determination in the process of step S5 of Fig. 4 is not limited to Tr≥Te, and may be Tr-A≥Te (where A is a predetermined value) in consideration of influences of the sensor variations. Moreover, the condition of operating cooler fan 6 in step S10 of Fig. 4 is not limited to Te≤Tr, and may be Te≤Tr-B (where B is a predetermined value) in consideration of the influences of the sensor variations.

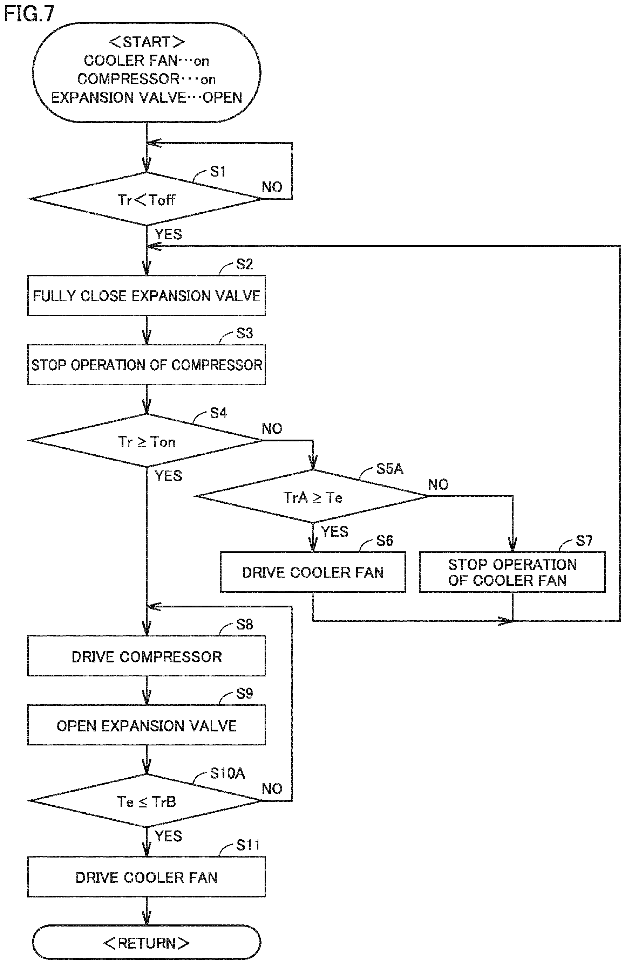

Fig. 7 is a flowchart for a condition of stopping the operation of cooler fan 6 when compressor 1 is non-operational and a condition of driving cooler fan 6 after restarting the operation of compressor 1, in the case where the sensor variations are taken into consideration. The flowchart of Fig. 7 is different from the flowchart of Fig. 4 in that steps S5A, S10A are performed instead of steps S5, S10. Hence, steps S5A, S10A will be hereinafter described and the other parts will not be described repeatedly.

In step S5A, control device 20 compares temperature Tr of storage compartment 13 with cooler temperature Te to determine whether to make cooler fan 6 operational or non-operational. On this occasion, tolerance A is provided in consideration of the variations of the temperature sensors. In step S5A, when Tr-A≥Te is satisfied (YES in S5A), the process proceeds to step S6, whereas when Tr-A≥Te is not satisfied (NO in S5A), the process proceeds to step S7. By taking tolerance A into consideration, cooler fan 6 can become non-operational securely before storage compartment temperature Tr becomes higher than cooler temperature Te.

In step S10A, after restarting the operation of compressor 1, control device 20 compares storage compartment temperature Tr with cooler temperature Te to determine whether to drive cooler fan 6. On this occasion, tolerance B is provided in consideration of the variations of temperature sensors 7, 8. When Te≤Tr-B is not satisfied (NO in S10A), it is determined that the cooler is not sufficiently cooled. Hence, the process proceeds to step S8 and control device 20 maintains the non-operational state of cooler fan 6. When Te≤Tr-B is satisfied, it is determined that cooler 4 is sufficiently cooled. Hence, the process proceeds to step S11 and control device 20 drives cooler fan 6 to send cool air to storage compartment 13.

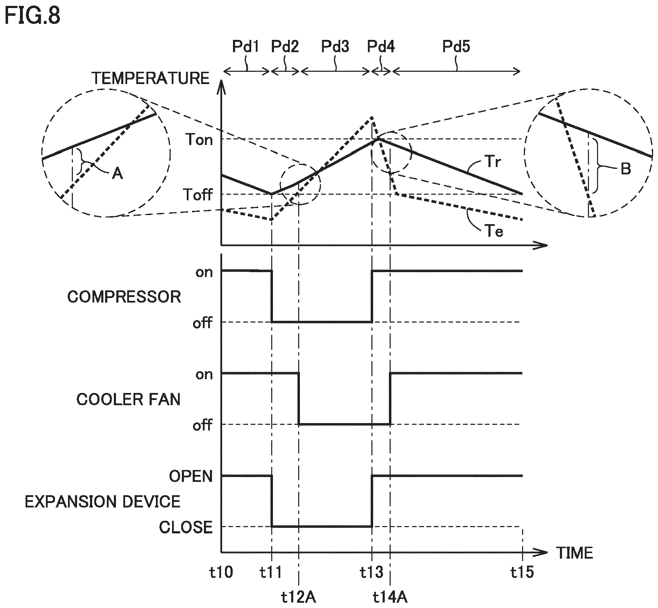

Fig. 8 is a waveform diagram showing a temperature change when the control of the flowchart of Fig. 7 is performed. In the waveform diagram of Fig. 8, as compared with the waveform diagram of Fig. 6, a time t12A, which corresponds to a timing to stop the operation of cooler fan 6, is close to time t11, and a time t14A, which corresponds to a timing to restart the operation of cooler fan 6, is further away from time t13.

Thus, by taking tolerances A, B into consideration, cooler fan 6 can be securely prevented from being driven when cooler temperature Te is higher than storage compartment temperature Tr.

### Second Embodiment.

In a second embodiment, the following describes a case where two storage compartments are provided. A refrigeration cycle of the refrigeration machine according to the second embodiment is the same as that described in the first embodiment with reference to Fig. 1 or Fig. 2, and therefore will not be described.

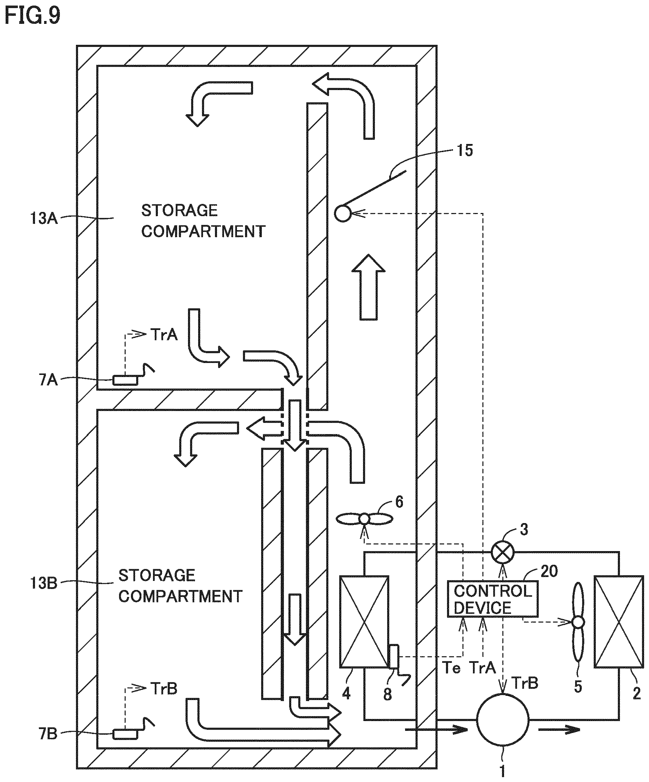

The refrigeration machine according to the second embodiment has two or more storage compartments that can be set to different setting temperatures. Fig. 9 shows an exemplary configuration of a refrigeration machine having two storage compartments according to the second embodiment. In Fig. 9, a feature lies in that the temperature of a storage compartment 13B is higher than that of a storage compartment 13A.

The temperature of storage compartment 13A is controlled by a damper 15 provided in an air path that connects between cooler 4 and storage compartment 13A. For example, control device 20 opens or closes damper 15 in accordance with an output value of temperature sensor 7A of storage compartment 13A. By opening damper 15, cooling air flows into storage compartment 13A, with the result that temperature TrA of storage compartment 13A is decreased. Moreover, by closing damper 15, the cooling air cannot flow into storage compartment 13A, with the result that temperature TrA of storage compartment 13A is increased due to transfer of heat from external air. Hence, control device 20 can adjust the temperature of storage compartment 13A by opening or closing damper 15 based on an output value of temperature sensor 7A.

No damper is provided in an air path from cooler 4 to storage compartment 13B. This is due to the following reason: since the setting temperature of storage compartment 13B is low, cooling air needs to always flow thereinto. For example, control device 20 adjusts the temperature of storage compartment 13B by controlling the frequency and ON-OFF of compressor 1 in accordance with an output value of temperature sensor 7B of storage compartment 13B.

Moreover, storage compartment temperature Tr described in the control flow diagram (each of Fig. 4 and Fig. 7) is also applicable to temperature TrB of storage compartment 13B in the second embodiment in which two or more storage compartments are provided. By employing storage compartment temperature Tr of the control flow diagram (each of Fig. 4 and Fig. 7) as temperature TrB of storage compartment 13B, the temperature of storage compartment 13B having the low setting temperature can be prevented from being increased greatly from the setting temperature.

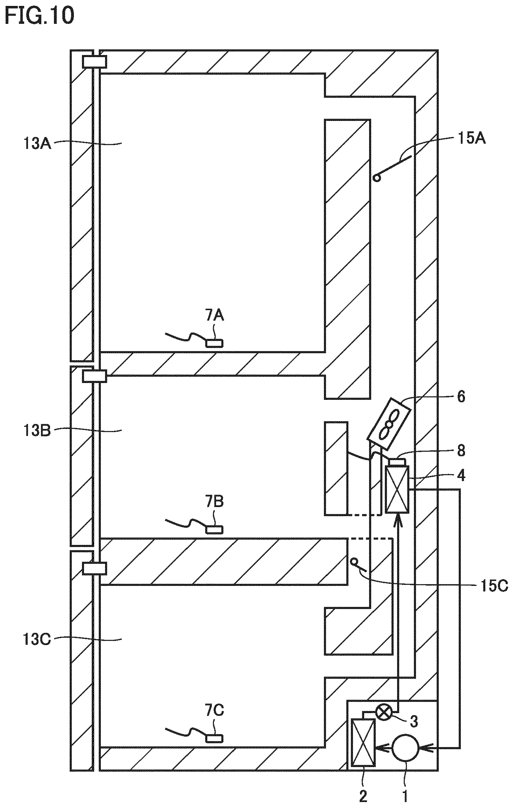

Fig. 10 shows a modification representing a refrigeration machine having three storage compartments. In the modification of the second embodiment as shown in Fig. 10, a configuration close to that of a general refrigerator will be described as one example of the refrigeration machine. The refrigeration machine shown in Fig. 10 includes storage compartments 13A to 13C. For example, storage compartment 13A disposed at an upper stage is a cold compartment, storage compartment 13B disposed at a middle stage is a freezer compartment, and storage compartment 13C disposed at the lower stage is a vegetable compartment. The setting temperature of storage compartment 13B is set to be lower than the setting temperatures of storage compartment 13A and storage compartment 13C. Compressor 1 and condenser 2 are disposed at the bottom portion and rear surface of storage compartment 13C, and cooler 4 and cooler fan 6 are disposed in an air path at the rear surface of storage compartment 13B.

In such a configuration, the same control is applicable with storage compartment temperature Tr described in the control flow diagram (each of Fig. 4 and Fig. 7) being employed as setting temperature TrB of storage compartment 13B.

### Third Embodiment.

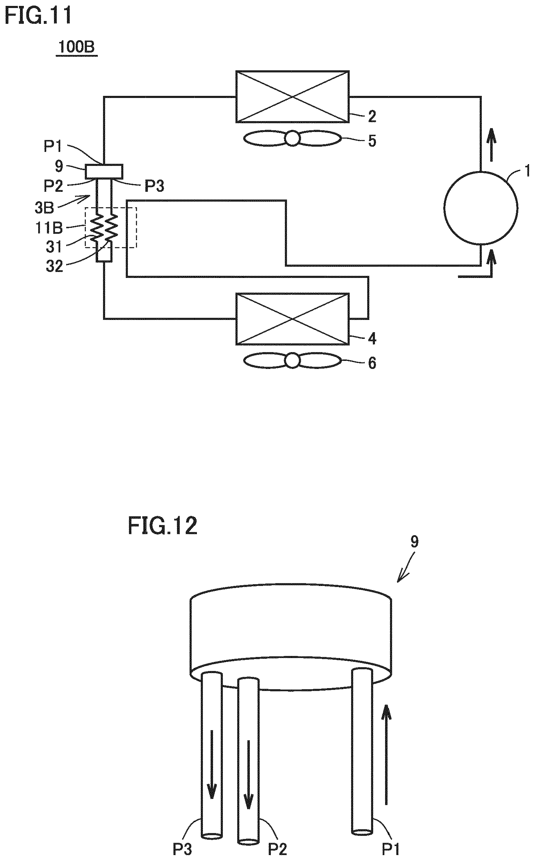

Fig. 11 is a schematic view of a refrigeration cycle of a refrigeration machine according to a third embodiment. With reference to Fig. 11, a refrigeration machine 100B includes: a compressor 1 changeable in rotating speed; a condenser 2; an expansion device 3B; a cooler 4; a condenser fan 5; and a cooler fan 6. Compressor 1, condenser 2, expansion device 3B, and cooler 4 are communicated via a refrigerant pipe to form a refrigeration cycle.

Expansion device 3B includes a flow path switching valve 9 and capillary tubes 31, 32. Expansion device 3B employs capillary tubes 31, 32, which are pipes having small diameters to provide a pressure difference. An amount of contraction of each of capillary tubes 31, 32 is fixed. Flow path switching valve 9 has one inlet-side flow path PI and two outlet-side flow paths P2, P3.

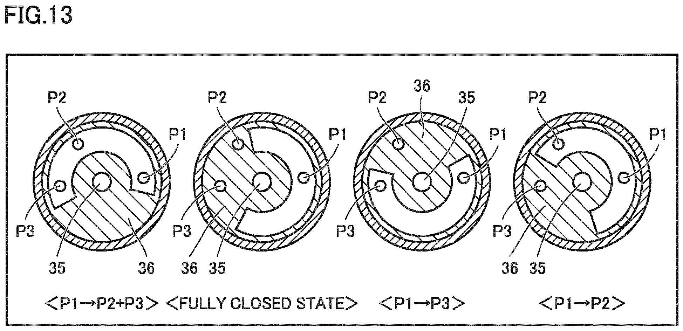

Fig. 12 is a schematic view showing an external appearance of flow path switching valve 9. Fig. 13 shows a switching state of flow path switching valve 9. It should be noted that each of Fig. 12 and Fig. 13 shows an example in which two capillary tubes 31, 32 are connected to outlet-side flow paths P2, P3 of flow path switching valve 9, respectively; however, the number of the capillary tubes may be 1, 3, or more and is not limited to 2.

By rotating and moving the valve body in flow path switching valve 9 to connect the inlet-side and outlet-side flow paths, a manner of flow of the refrigerant can be switched. Fig. 13 illustrates: a case where the refrigerant flows from inlet-side flow path PI to the two flow paths (P2+P3); the fully closed state of the expansion device in step S2 of the control flow diagram of each of Fig. 4 and Fig. 7; a case where the refrigerant flows from inlet-side flow path PI to outlet-side flow path P3; and a case where the refrigerant flows from inlet-side flow path PI to outlet-side flow path P2.

In the case of the flow path switching valve shown in Fig. 13, by rotating valve body 36 with respect to a rotation shaft 35, it is possible to select to fully close the expansion device or select any of the plurality of connected capillary tubes 31, 32. Hence, the amount of contraction of the path for the refrigerant can be changed. That is, flow path switching valve 9 and capillary tubes 31, 32 function as the expansion device.

The other configurations and control flow diagram of the third embodiment are the same as those of the first embodiment, and therefore are not described repeatedly.

It should be noted that as shown in Fig. 11, an internal heat exchanger 11B may be provided to exchange heat between the refrigerant flowing in a pipe (which may be capillary tubes 31, 32) connected to the outlet of cooler 4 and the refrigerant to be suctioned by compressor 1, when decompressing the refrigerant in expansion device 3.

### Fourth Embodiment.

A feature of a fourth embodiment lies in that compressor 1 is driven with expansion device 3 closed in the operation after compressor 1 becomes non-operational. By controlling compressor 1 and expansion device 3 in this way, pressure at the low pressure portion can be decreased abruptly, whereby cooler fan 6 can be driven promptly.

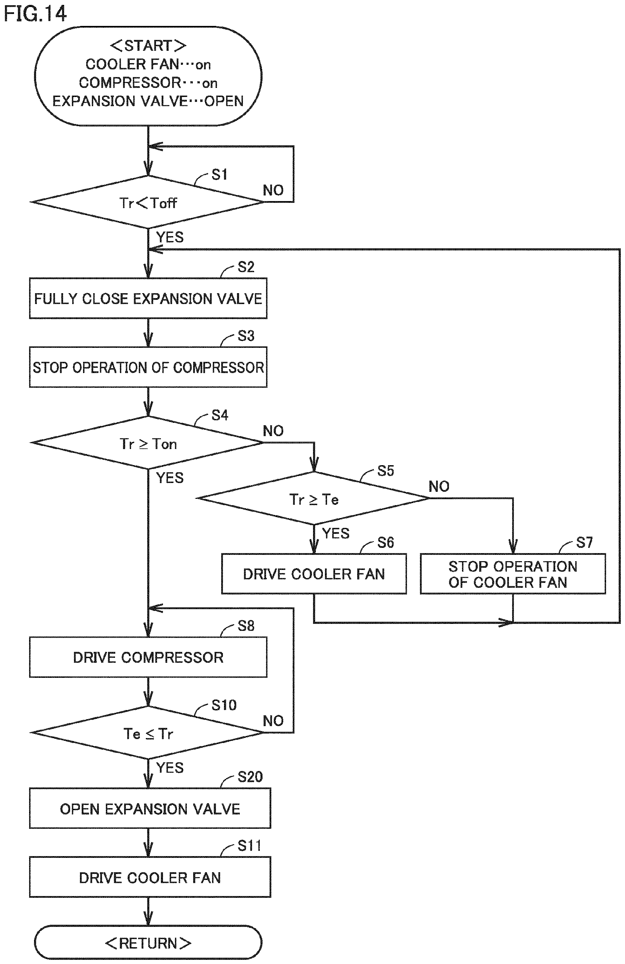

Fig. 14 is a flowchart showing the control performed in the fourth embodiment. In comparison with the flowchart of Fig. 4, in the flowchart of Fig. 14, the process of opening the expansion valve in step S9 is omitted and a process of step S20 is added instead. After S8 of restarting the operation of compressor 1, control device 20 compares cooler temperature Te with storage compartment temperature Tr immediately in S10. When Te≤Tr is satisfied in step S10, the process proceeds to step S20 to open expansion device 3. The other parts of the flowchart of Fig. 14 are the same as those of the flowchart of Fig. 4, and therefore will not be described repeatedly.

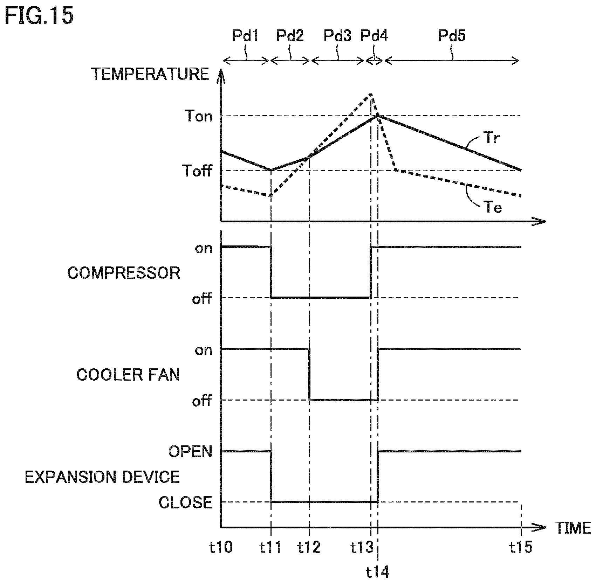

Fig. 15 is a waveform diagram showing a temperature change when the control of the flowchart of Fig. 14 is performed. In the waveform diagram of Fig. 15, compressor 1 is operated and expansion device 3 is controlled to be in the closed state during a period of times t13 to t14. By controlling in this way, pressure of the low-pressure portion connected to the suction side of compressor 1 can be decreased promptly.

### Fifth Embodiment.

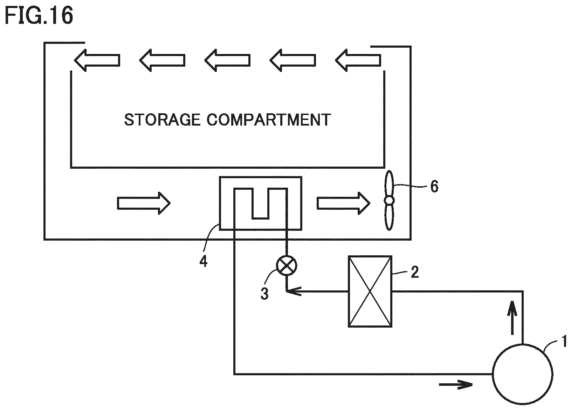

Fig. 16 is a schematic view showing a configuration of a refrigeration machine according to a fifth embodiment. The fifth embodiment represents an exemplary food showcase placed in a shop or the like. For a refrigeration cycle, the configuration shown in each of Fig. 1, Fig. 2, and Fig. 11 is applicable. Also in the case of such a food showcase, the same effect as that in each of the first to fourth embodiments can be obtained by performing the control of each of Fig. 4, Fig. 7, and Fig. 14.

### (Conclusion)

Finally, with reference to representative figures again, the first to fifth embodiments will be summarized.

With reference to Fig. 3, a refrigeration machine according to the present disclosure includes: a refrigerant circuit in which a compressor 1, a condenser 2, an expansion device 3, and a cooler 4 are connected by a refrigerant pipe; a first storage compartment 13 configured to store a cooling target; a fan 6 configured to send air from cooler 4 to first storage compartment 13; a first temperature sensor 7 configured to detect a temperature Tr of first storage compartment 13; and a second temperature sensor 8 configured to detect a temperature Te of cooler 4. Expansion device 3 is configured to have a degree of opening settable to a fully closed state, and the degree of opening corresponds to the fully closed state while compressor 1 is non-operational. As shown in S5 of Fig. 4 or S5A of Fig. 7, fan 6 is configured to continue to be operational while compressor 1 is non-operational and when a temperature difference ΔT obtained by subtracting a detection temperature Te of second temperature sensor 8 from a detection temperature Tr of first temperature sensor 7 is larger than a first criterion value (0 or a tolerance A). Fan 6 is configured to become non-operational when transition is made, while compressor 1 is non-operational, from a state in which temperature difference ΔT is larger than the first criterion value to a state in which temperature difference ΔT is smaller than the first criterion value. As shown in S10 of Fig. 4 or S10A of Fig. 7, fan 6 is configured to be non-operational while compressor 1 is operational and when temperature difference ΔT is smaller than a second criterion value (0 or a tolerance B). Fan 6 is configured to become operational when transition is made, while compressor 1 is operational, from a state in which temperature difference ΔT is smaller than the second criterion value to a state in which temperature difference ΔT is larger than the second criterion value.

Preferably, as shown in Fig. 10, the refrigeration machine includes a plurality of storage compartments 13A to 13C. The first storage compartment is a storage compartment 13B having a lowest setting temperature among the plurality of storage compartments.

Preferably, as shown in Fig. 1 and Fig. 2, expansion device 3 is an expansion valve changeable in degree of opening.

Preferably, as shown in Fig. 11, expansion device 3B includes a capillary tube 31, 32, and a flow path switching valve 9 configured to open and close a refrigerant pipe (flow path P2, P3) communicating with capillary tube 31, 32.

Preferably, as shown in Fig. 2 and Fig. 11, the refrigeration machine further includes an internal heat exchanger 11, 11B configured to exchange heat between refrigerant passing through expansion device 3, 3B and refrigerant in a suction pipe connected to compressor 1.

Preferably, as shown in Fig. 14 and Fig. 15, not only while compressor 1 is non-operational but also while compressor 1 is operational, expansion device 3 or 3B is configured to continue to be in the fully closed state during a period in which detection temperature Tr of first temperature sensor 7 is higher than detection temperature Te of second temperature sensor 8.

### (Effect)

According to the refrigeration machine according to each of the first to fifth embodiments, the storage compartment temperature can be suppressed from being increased while compressor 1 is non-operational. Hence, a non-operational period of the compressor can be long. As a result, an average amount of consumption of power including power for turning on and off compressor 1 can be reduced.

Moreover, in the refrigeration machine according to each of the first to fifth embodiments, the difference between the high pressure of the refrigerant and the low pressure of the refrigerant can be maintained during the non-operational period of compressor 1. As a result, when restarting the operation of compressor 1, it is not necessary to make the difference between the high pressure and the low pressure again, whereby energy loss in the refrigeration cycle when turning on/off compressor 1 can be reduced. Accordingly, the amount of consumption of power of the refrigeration machine can be reduced.

Further, in the refrigeration machine according to each of the first to fifth embodiments, air having a temperature more than or equal to storage compartment temperature Tr can be prevented from being sent to the storage compartment by driving cooler fan 6 with cooler 4 having not been cooled yet immediately after restarting the operation of compressor 1. As a result, temperature Tr of the storage compartment can be prevented from being increased, whereby the temperature of food placed on the storage compartment can be prevented from being increased. As a result, quality of the food can be secured.

Moreover, the refrigeration machine according to each of the first to fifth embodiments provides an energy saving effect by causing cooler fan 6, expansion device 3, and compressor 1 to perform the series of operations in the order described above. For example, when cooler fan 6 is not operated in period Pd2 of t11 to t12 of Fig. 6 or t11 to t12A of Fig. 8, warm air in the storage compartment does not reach cooler 4, with the result that temperature Te of cooler 4 does not become more than storage compartment temperature Tr.

Moreover, when expansion device 3 is not fully closed in period Pd2 of t11 to t12 of Fig. 6 or t11 to t12A of Fig. 8, the high pressure and the low pressure are immediately changed to be equal to each other just after compressor 1 becomes non-operational. Accordingly, cooler temperature Te becomes more than or equal to storage compartment temperature Tr. Hence, loss is caused due to the high pressure and the low pressure being changed to be equal to each other, thus resulting in decreased energy saving. Hence, energy saving is attained only by controlling compressor 1, cooler fan 6, and expansion device 3 in the series of flows described in order of periods Pd1 to Pd5 of each of Fig. 6, Fig. 8, and Fig. 15.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: compressor; 2: condenser; 3, 3B: expansion device; 4: cooler; 5: condenser fan; 6: cooler fan; 7, 7A, 7B, 8: temperature sensor; 9: flow path switching valve; 11, 11B: internal heat exchanger; 13, 13A, 13B, 13C: storage compartment; 15: damper; 20: control device; 31, 32: capillary tube; 35: rotation shaft; 36: valve body; 100, 100B: refrigeration machine; P1, P2, P3: flow path; Pd1, Pd2, Pd3, Pd5: period.

## Claims

1. A refrigeration machine comprising:
a refrigerant circuit in which a compressor, a condenser, an expansion device, and a cooler are connected by a refrigerant pipe;
a first storage compartment configured to store a cooling target;
a fan configured to send air from the cooler to the first storage compartment;
a first temperature sensor configured to detect a temperature of the first storage compartment; and
a second temperature sensor configured to detect a temperature of the cooler, wherein
the expansion device is configured to have a degree of opening settable to a fully closed state, and the degree of opening corresponds to the fully closed state while the compressor is non-operational,
the fan is configured to continue to be operational while the compressor is non-operational and when a temperature difference obtained by subtracting a detection temperature of the second temperature sensor from a detection temperature of the first temperature sensor is larger than a first criterion value,
the fan is configured to become non-operational when transition is made, while the compressor is non-operational, from a state in which the temperature difference is larger than the first criterion value to a state in which the temperature difference is smaller than the first criterion value,
the fan is configured to be non-operational while the compressor is operational and when the temperature difference is smaller than a second criterion value, and
the fan is configured to become operational when transition is made, while the compressor is operational, from a state in which the temperature difference is smaller than the second criterion value to a state in which the temperature difference is larger than the second criterion value.

2. The refrigeration machine according to claim 1, comprising a plurality of storage compartments, wherein the first storage compartment is a storage compartment having a lowest setting temperature among the plurality of storage compartments.

3. The refrigeration machine according to claim 1 or 2, wherein the expansion device is an expansion valve changeable in the degree of opening.

4. The refrigeration machine according to claim 1 or 2, wherein
the expansion device includes
at least one capillary tube, and
a valve configured to open and close a refrigerant pipe communicating with the capillary tube.

5. The refrigeration machine according to claim 1 or 2, further comprising a heat exchanger configured to exchange heat between refrigerant passing through the expansion device and refrigerant in a suction pipe connected to the compressor.

6. The refrigeration machine according to any one of claims 1 to 5, wherein not only while the compressor is non-operational but also while the compressor is operational, the expansion device is configured to continue to be in the fully closed state during a period in which the detection temperature of the first temperature sensor is higher than the detection temperature of the second temperature sensor.
